(19) Europäisches Patentamt

European Patent Office

Office européen des brevets

(11) **EP 1 624 137 A1**

(12) **EUROPEAN PATENT APPLICATION**

(43) Date of publication:
08.02.2006 Bulletin 2006/06

(51) Int Cl.:
*E04H 12/12* (2006.01)

(21) Application number: 04103719.3

(22) Date of filing: 02.08.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **The European Community, represented by the European Commission**
**1049 Brussels (BE)**

(72) Inventor: **GUTTIEREZ TENREIRO, Eugenio**
**21023, Besozzo (VA) (IT)**

(74) Representative: **Ocvirk, Philippe et al**
**Office Ernest T. Freylinger S.A.**
**P.O. Box 48**
**8001 Strassen (LU)**

(54) **SUPPORT COLUMN FOR A WIND TURBINE OR A BRIDGE**

(57)     A support column consisting of an assembly of hollow-section column segments is presented. Each column segment comprises a composite formwork element having an inner tubular shell made of fibre reinforced polymer and an outer tubular shell made of fibre reinforced polymer and surrounding the inner tubular shell so as to define an annular chamber therebetween. The chamber of each composite formwork element is filled with concrete or mortar. The composite formwork elements of two consecutive column segments are at least partially joined together. The composite formwork elements remain in the finished support column and provide tensile reinforcement.

Fig.1

## Description

FIELD OF THE INVENTION

The present invention generally relates to a support column, in particular for supporting a wind turbine or a bridge.

BACKGROUND OF THE INVENTION

The building of wind turbines or bridges typically requires the erection of tall support columns (also called towers or piers), often in areas of difficult accessibility, which makes the construction of such support columns rather difficult and thus expensive.

As a matter of fact, reinforced concrete and steel towers or support columns offer competitive prices in standard erection sites where it is possible to use heavy lifting and construction equipment. However, where the construction has to be carried out in isolated locations or in water depths of over 10 m (such as in offshore conditions), the usual ancillary costs of cranes, access roads and other logistic aspects may increase the net construction costs.

In the case of concrete bridge piers for example, one major shortcoming of the standard construction is that the erection of the piers requires the use of heavy and complex formworks (such as sliding formworks), in which steel reinforcing elements are positioned, and the concrete is then poured and allowed to cure. It will be understood that such technique involves considerable investment into manufacturing and deployment of formworks, as well as important logistics of mounting and dismantling.

Also in case the support column is made from large monolithic elements that are assembled on-site, there is a heavy logistic burden due to the large size and weight of such elements.

OBJECT OF THE INVENTION

The object of the present invention is to provide an alternative type of support column, that incurs less logistical burden for its construction and that is particularly well suited for a construction in isolated areas. This object is achieved by a support column as claimed in claim 1.

SUMMARY OF THE INVENTION

A support column in accordance with the present invention consists of an assembly of hollow-section column segments, which each comprise a composite formwork element having an inner tubular shell made of fibre reinforced polymer and an outer tubular shell made of fibre reinforced polymer and surrounding the inner tubular shell so as to define an annular chamber therebetween. The chamber of each composite formwork element is filled with concrete or mortar. Furthermore, the composite formwork elements of two consecutive column segments are at least partially joined together.

The support column of the invention thus involves the use of lightweight formwork elements made of fibre reinforced polymer material (also called FRP), that form an integral part of the finished column structure. The construction of the column to full height is performed by using the top of each finished column segment as a platform for the erection of the next rising column segment. In order to do so, a first composite formwork element is set in place and its annular chamber is filled with concrete or mortar. After setting, a second formwork element is then positioned on top of the first formwork element and joined on site using e.g. conventional FRP joining technology. The second formwork element is then filled with concrete or mortar. This procedure is repeated until the desired height is obtained.

It will be appreciated that the composite formwork elements not only serve to contain the concrete or mortar while it is poured and sets, but they also serve as concrete reinforcement, as allowed by the use of fibre reinforced polymer. Hence, in the support column of the invention, the concrete bears the compressive loads and the FRP material of the formwork elements acts as tensile reinforcement.

In comparison to conventional columns, the support column of the invention is made from lightweight composite formwork elements that are easy to transport and manipulate, so that smaller construction crews and lighter equipment is required. In addition, there is no need for special formwork equipment, such as sliding formworks, that incur high development and logistic costs. This will thus facilitate the building of such support column in isolated or difficultly accessible regions, as well as reduce the costs. Therefore, the column of the invention is particularly useful to be used as wind turbine tower, or as bridge pier, either on land or offshore.

A further advantage of the present column is that since the composite formwork elements remain in the finished structure and act themselves as reinforcing elements, there is no need for additional steel reinforcement such as steel bars.

For a homogeneous load distribution, the composite formwork elements preferably consist of shells having a geometry of revolution. Typically, the inner and outer tubular shells may have a cylindrical shape or a truncated conical shape. In such a case, the inner and outer tubular shells are then preferably coaxially arranged so that the annular chamber has a ring-shaped section.

It is to be noted that the truncated conical shape allows considerable saving in volume during transport. Indeed, when using formwork elements of conical shape it is advantageous to design them so that they can be inserted into one another in "paper-cup" style. In this manner the cost of the logistics of deployment can be most beneficial as the total volume that has to be transported to the construction site is considerably reduced.

The composite formwork elements preferably comprise spacing means designed to maintain the spacing between the inner and outer tubular shells. In a preferred embodiment, the spacing means comprises a corrugated sheet in-between the inner and outer shells and bonded thereto, the corrugated sheet having a thickness corresponding to the spacing between the inner and outer shells and being arranged in such a way as to define essentially axially extending channels in the chamber. Such a corrugated sheet also preferably consists of fibre reinforced polymer. The bonding of the corrugated sheet to the shells may be chemical (e.g. adhesive) or mechanical.

The composite formwork elements are further advantageously designed to obtain an efficient transfer of tensile-load between the FRP shells and the concrete. A first manner of ensuring an efficient shear transfer is to form the surfaces of the inner and outer shells that define the annular chamber so that they have a roughened surface providing shear locks. Shear transfer can also be achieved by providing holes in the corrugated sheet to allow communication between the channels defined by said corrugated sheet. In such a case, the holes preferably have a size that is at least two times the largest aggregate size of the concrete filling.

In a particularly preferred embodiment, the formworks have closed upper and lower ends (i.e. the extremities in axial direction) so as to form a sealed chamber. The corrugated sheet is dimensioned and arranged in-between the shells in such a way that there is at least one annular gap free of corrugated sheet. This annular gap thus communicates with all of the axial channels defined by the corrugated sheet. In such a case, for the filling of the formwork, a hole is provided on the side in one of the shells at the level of the annular gap, and the concrete or mortar mixture is introduced in the formwork through this hole. In practice, another opening is preferably also formed in one of the shells to allow air to escape during the filling. As concrete is introduced into the formwork chamber, the channels next to the hole will first fill up, and the filling will continue further away from the fill hole. It will be noted that in this preferred embodiment, the formwork preferably comprises two such annular gaps, one at each end. This provides another flow path for the concrete mixture should the other annular gap become clogged.

The selection of the type of fibre for the FRP shells, and also preferably for the corrugated sheet, may be any combination of fibre-reinforced polymer composites using any of glass, carbon, aramid fibres or combinations with other fibres. The stratification and angle orientation of the FRP layers that make up the inner and outer shells are preferably adapted depending on the desired mechanical properties: these should preferably provide both axial and circumferential stiffness in order to meet the serviceability conditions (such as natural frequency) and limit load capacity that the column must withstand.

The joining between two consecutive formwork elements can be carried out by any adapted composite joining technique. For example, the joining can be carried out by standard techniques using pre-impregnated uncured FRP laminates or wet lay-up, resin infusion, vacuum bagging with pre-impregnated material or on site filament or wrap winding. A particularly preferred way of joining two consecutive formworks is that of resin infusion using a pre-stitched dry cloth having an H-shape that fits between the adjacent ends of two consecutive modules. The resin infusion is then practiced in the standard manner using the cylinders themselves as forms onto which the vacuum sealing and infusion systems are connected to.

It is to be noted that the joined area need not cover all 360 degrees in circumference, in particular since small gaps may be required to provide positioning areas for mechanical clamps used to secure the structure while the joining is carried out.

It will also be understood that on the basis of the structural loading demands, such as axial loads, wind gusts or seismic activity, each formwork element is advantageously dimensioned and filled with either high-strength concrete (both for the purposes of structural stability and ballast) or other mortar in order to generate a macro-composite sandwich panel having the required structural, static, and dynamic characteristics.

According to another aspect of the present invention, there is proposed a method for building a support column from composite formwork elements having an inner tubular shell made of fibre reinforced polymer and an outer tubular shell made of fibre reinforced polymer and surrounding the inner tubular shell so as to define an annular chamber therebetween. The method comprises the steps of:

    (a) installing a first composite formwork element;

    (b) filling the chamber of the first composite formwork element with concrete or mortar;

    (c) positioning and joining a further composite formwork element on top of the former composite formwork element, in which the concrete or mortar filling has set; and

    (d) filling the chamber of this further composite formwork element with concrete or mortar.

This procedure of steps (c) and (d) is then continued with further composite formwork elements until the desired column height is reached.

As already discussed above, the use of such composite formwork element for building a support columns brings about a number of advantages. A further benefit of the present invention is that the proper filling of the formwork element can be visually controlled, since FRP materials are often semi-transparent. Indeed, the operator can visualise the concrete as it fills the chamber and check for voids. In order to fill such a void, it suffices to drill an opening in the FRP shell to access to the void and to fill it up with concrete. The opening is then closed using conventional FRP technology. This is clearly not possible with standard technologies using complex steel or wood formworks.

For offshore applications, the use of composite formwork elements closed at both ends and provided with at least one annular gap is preferred. The assembly of these formworks would proceed along the same lines as for those in difficult-access land terrains. Basically, the formwork element serving as a base would be carried either on a boat or by floatation to the site of construction, where it would be sunk by pumping concrete into the formwork element. Sinking piers into position is a standard procedure in offshore applications. It will however be noted that it may be preferable to design the formwork that will serve as base column segment so that it has a greater height than the other formworks, but with a plurality of annular gaps periodically distributed along the height in order to ensure easy flow of concrete.

BRIEF DESCRIPTION OF THE DRAWINGS

The present invention will now be described, by way of example, with reference to the accompanying drawings, in which:

    FIG.1: is a longitudinal section view of a first embodiment of a support column in accordance with the invention;

    FIG.2: is a cross-sectional view through a composite formwork element of the column of Fig.1;

    FIG.3: is an enlarged view of detail A of Fig.1;

    FIG.4: is an enlarged view of detail B of Fig.1;

    FIG.5: is a perspective view of a corrugated sheet used as spacer;

    FIG.6: is a conceptual longitudinal section view of a second embodiment of a support column in accordance with the invention;

    FIG.7: is a sketch illustrating a set of conical segments fitted into one another;

    FIG.8: is an enlarged view of detail C of Fig.1 illustrating a preferred structure of a composite formwork element;

    FIG.9: is a section view through a joining element; and

    FIG.10: is section view illustrating the joining of two formwork elements using the joining element of Fig.9 with the technique of resin infusion.

DETAILED DESCRIPTION OF A PREFERRED EMBODIMENT

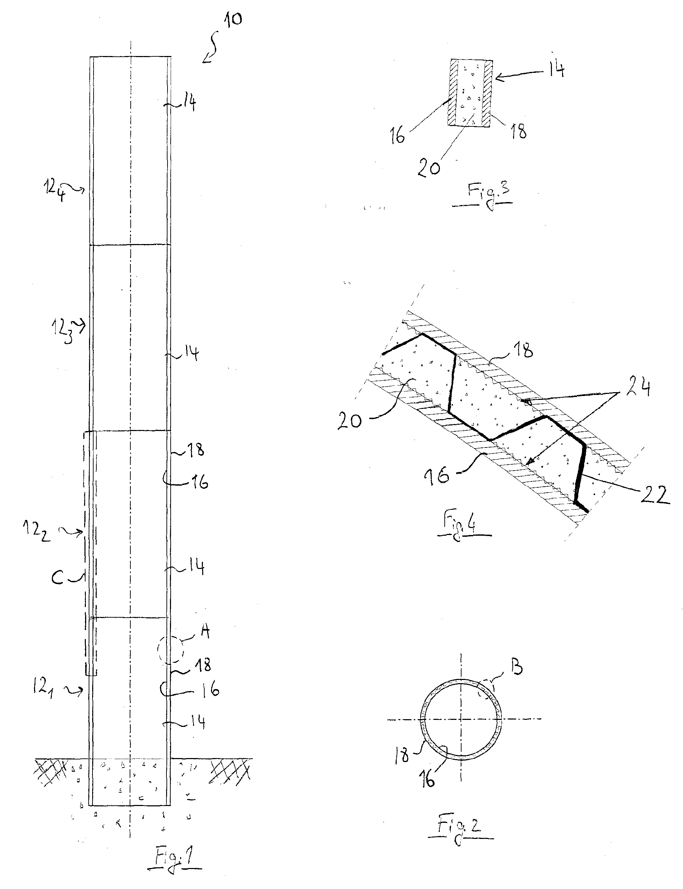

Fig.1 schematically illustrates a preferred embodiment of a support column 10 in accordance with the present invention. The column 10 consists of four hollow-section column segments generally indicated $12_1...12_4$. It will be appreciated that each column segment $12_i$ comprises a composite formwork element 14 having an inner tubular shell 16 and an outer tubular shell 18 surrounding the inner tubular shell 16 to form an annular chamber 20. The inner and outer tubular shells 16 and 18 are made from fibre-reinforced polymer (FRP).

The annular chamber 20 of each formwork element 14 is filled with concrete (see Figs.3 and 4). Furthermore, the formwork elements 14 of two consecutive column segments respectively $12_1$ to $12_2$, $12_2$ to $12_3$ and $12_3$ to $12_4$ are joined together, as will be explained below.

As can be seen from Figs. 1 and 2, in the present embodiment, each formwork element 14 comprises cylindrical inner and outer shells 16 and 18 that are coaxially arranged, so that the annular chamber 20 is ring-shaped. The shells are of same height and determine the height of the column segment $12_i$.

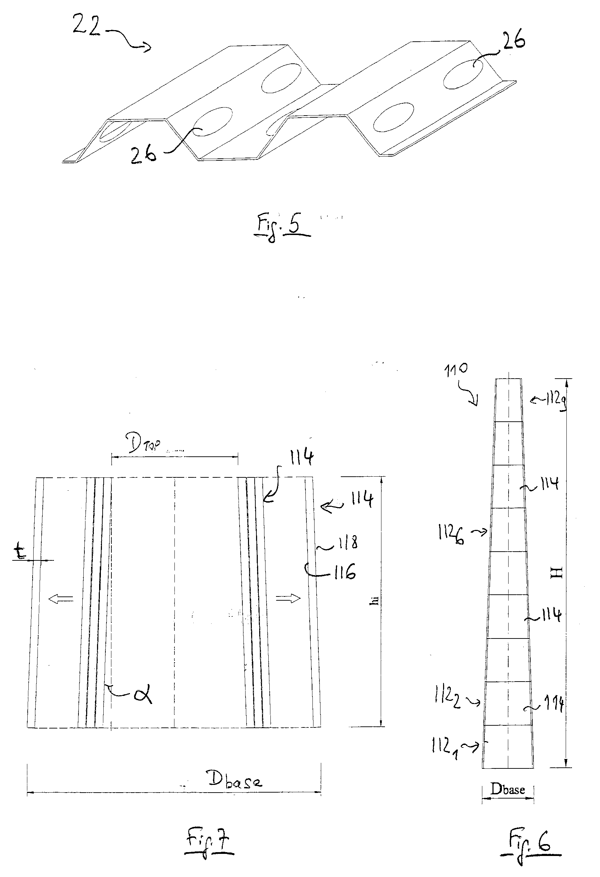

The spacing between the two shells 16 and 18 is advantageously maintained by spacing means taking the form of a corrugated sheet 22 (Fig.5) that is arranged in the annular chamber 20 so as to define channels extending in the axial direction (see Fig.4). This corrugated sheet 22, also preferably made of FRP material, has a thickness corresponding to the spacing between the inner and outer shells 16 and 18 and is bonded to the shells. The corrugated sheet 22 preferably extends over the whole circumference of the formwork element 14 and over most of its height, as will be explained in more detail below.

The construction of the column 10 is performed by using the top of each fin-ished column segment $12_i$ as a platform for the erection of the next rising column segment $12_{i+1}$. A first formwork element 14 is set into a foundation (e.g. a concrete well) and concrete or mortar is filled in the chamber 20 of the formwork element 14 (and allowed to set) to form the base column segment $12_1$. Then the following formwork element 14 is stacked and bonded to the formwork element 14 of the base segment $12_1$. Concrete or mortar is then poured in the second formwork element 14 and allowed to set, whereby the second column segment $12_2$ is obtained. This procedure is repeated until the full column height is reached.

The support column 10 is thus made from lightweight composite elements 14 that are easy to transport and manipulate, so that smaller construction crews and lighter equipment is required for its construction. Furthermore, the composite formwork elements 14 not only serve to contain the concrete or mortar while it is poured and sets, but they also serve as concrete reinforcement (since they remain in the finished column), as allowed by the use of fibre reinforced polymer. It follows that the use of conventional steel bar reinforcement in the formworks is not required.

The selection of the type of fibre for the inner and outer shells 16 and 18, and preferably for the corrugated sheet 22, may be any combination of fibre-reinforced polymer composites using any of glass, carbon, aramid fibres or combinations with other fibres. The shells 16, 18 can be manufactured from moulds using wet-lay or pre-impregnated FRP materials, filament or wrap winding, vacuum infusion etc. The stratification and angle orientation (with regard to the longitudinal axis of the shells) of the FRP layers that make up the shells 16, 18 will depend on the desired mechanical properties: these shall preferably provide both axial and circumferential stiffness so as to meet the serviceability conditions (such as natural frequency) and limit load capacity that the tower or pier must withstand.

Regarding the joining between two consecutive formwork elements 14, a number of conventional FRP joining techniques may be applied such as for example wet lay-up, resin infusion, vacuum bagging with pre-impregnated material or on site filament or wrap winding. For example, a strip of pre-impregnated uncured FRP laminates may be applied to cover an upper outer shell portion of a lower column segment $12_i$ and a lower outer shell portion of the consecutive upper column segment $12_{i+1}$. However, a particularly preferred technique for joining two consecutive formworks is that of resin infusion using as joining element 23 (Fig.9) a pre-stitched dry cloth of annular shape and having an H-shaped cross-section. This joining element 23 is fitted between the adjacent ends of two consecutive formwork elements 14. The resin infusion is then practiced in the standard manner using the formworks themselves as forms onto which the vacuum sealing and infusion systems are connected to.

The joined area need not cover all 360 degrees in circumference, in particular since small gaps may be required to provide positioning areas to for mechanical clamps used to secure the structure while the joining is carried out. Indeed, the formworks are preferably held together during the joining/curing using temporary mechanical clamps. Any adapted clamping means such as e.g. bonded spring clamp (i.e. like for a suitcase) or bolted plates (into a hard part of the formwork) may be used. The number of clamps depends on the design and the environmental conditions prevalent during the joining stage.

Referring more specifically to the spacer or corrugated sheet 22, one of its main functions is to increase the radial stiffness and resistance to localised radial buckling of the concentric inner and outer shells 16 and 18, thus enabling them to function as a pressure vessel for the concrete until it sets. The buckling pressure that tends to separate the inner shell from the spacer depends, not so much on the effective radial stiffness of the shell but rather on the sandwich peel strength; i.e., the delamination is not stiffness dominated, but, rather, strength dependent. Therefore, the corrugated sheet 22 is preferably well bonded to the shells 16 and 18, either chemically (e.g. by gluing) or mechanically (e.g. using rivets).

It is also to be noted that the FRP formwork elements 14 are advantageously designed to obtain an efficient transfer of tensile-load between the FRP shells and the concrete. Therefore, the tensile properties of the FRP are transferred to the concrete or cement-like material via so-called mechanical shear locks, whereby the FRP formwork elements 14 function as tensile load-carrying elements. This can be achieved by: (1) shear transfer via contact of the inner sides of the shells directly to the concrete with which it is in contact and/or (2) shear transfer via the spacer (here the corrugated sheet 22).

In case 1, the surface roughness of the inner shell sides 16, 18 (defining the chamber 20) is artificially increased in order to provide shear key locks directly from the FRP to the concrete that has set hard whilst in contact with the shells after pouring. This surface roughness is indicated by arrows 24 in Fig.4. The surface roughness of these sides of the shells 16 and 18 may be introduced at the FRP shell manufacturing stage by a number of means. For example, this could be the result of moulding onto an irregular surface, sand-impregnation or bonding pultruded sections or gratings. Furthermore, if the concentric shells 16, 18 are manufactured with filament or wrap winding, the shear locks may be introduced by adding extra layers of filament so as to generate a protruding helical shear-locking device that runs along the axial length of the shell. Such protrusions confer the same mechanical properties as the helical whorls on standard steel reinforcing bars.

In case 2 the shear transfer is achieved by the concrete trapped through the thickness of the corrugated sheet 22. The bonding of the corrugated sheet 22 onto the inner and outer shells 16, 18 will ensure that the shear load is transferred thereto. In order to achieve this the corrugated sheet 22 is provided with holes 26, preferably having a size of the order of 2.5 times the largest aggregate size of the concrete mix. Such a corrugated sheet is schematically illustrated in Fig.5.

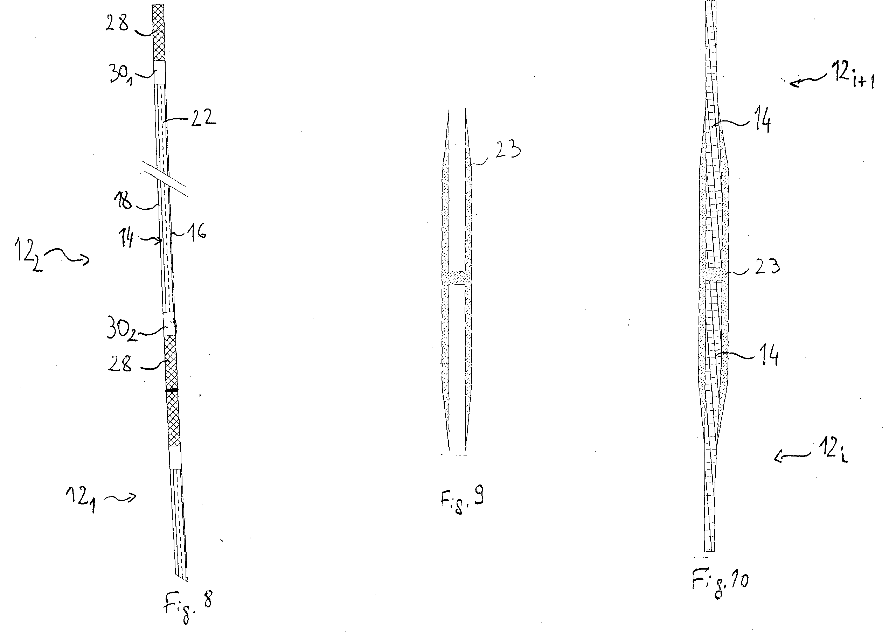

Turning now to Fig.8, a particularly preferred structure for the formwork element 14 is shown. The upper and lower ends (i.e. the extremities in axial direction) of the formwork 14 are closed by plugs indicated 28. This can be done by completely filling with FRP material the space between the inner and outer shells 16 and 18 over a certain length and over the whole circumference of the formwork 14. Furthermore, in view of the filling of such formwork, the corrugated sheet 22 is dimensioned and arranged in the annular chamber 20 so as to extend over the whole circumference of the formwork 14, but not over its whole height. In fact, the corrugated sheet 22 is arranged so as to leave two annular gaps $30_1$ and $30_2$ free

of corrugated sheet 22, between the extremities of the sheet 22 and the plugs 28. As a result, all axial channels defined by the corrugated sheet 22 open at both ends in the annular gaps $30_1$, $30_2$. The formwork element 14 is advantageously manufactured as such a self-contained and sealed element. On the construction site, in view of the filling of the formwork element 14, a hole is advantageously provided in the outer shell 18 at the height of the upper annular gap $30_1$. A plastic or metallic tap is then preferably fitted in this fill hole. This tap is adapted to receive a hose from the concrete pump in order to introduce the concrete or mortar mixture in the chamber 20. Another hole is preferably drilled at the level of the lower annular gap $30_2$ to allow trapped air to escape. Due to the particular inner structure of the chamber 20, the channels next to the tap will first fill up, and the filling will continue further away from the tap. Once the formwork is filled, the two holes are closed off, allowing the concrete to cure in a sealed environment.

It is to be noted that the vent hole (for the escape of trapped air) need not be in the lower annular gap $30_2$, but can also be arranged at the same level as the fill hole. Also, in case the formwork element is to be filled from the bottom, the fill hole may be provided in the lower annular gap and the vent hole in the upper annular gap.

It will be understood that the dimensions of the formworks will typically depend on the applications. To build a support column of about 50 meters in height, formworks having a height from 10 to 12 meters is considered typical.

In another preferred embodiment, illustrated in Fig.6, a support column 110 consists of column segments $112_1$...$112_9$ of truncated conical shape. In this case, the construction of the column 110 and the structure of each formwork element 114 is similar to that of the first embodiment, however the inner and outer shells 116 and 118 have a truncated conical shape. An inner structure similar to that shown in Fig.8 is also preferred for the conical formwork elements.

A great advantage of the use of truncated conical formwork elements 114 is that considerable saving in volume can be achieved by inserting each element 114 in "paper-cup" style. In this manner the cost of the logistics of deployment can be most beneficial as the total volume that has to be transported to the construction site is considerably reduced.

For optimum dimensioning of the truncated conical elements 114, the height $h_i$ of each element 114 should be dimensioned so that for a given total wall thickness $t$ (FRP shells plus concrete core) the angle $\alpha$ of the cone is given by:

$$\alpha = \arctan \frac{t}{h_i}$$

The stacking sequence for the column would be so that the top diameter $D_{top}$ of the lower formwork element 114 is the same size as the base diameter $D_{base}$ of the next formwork element 114 along the height. As an example, let us consider a tower of 50 m in height having a base diameter of 3.5 m and top diameter of 2 m at full height with a constant wall thickness of 50 mm. Such a column can be manufactured from 15 concatenated conical segments. However, in terms of transport all the formwork elements could fit into a volume of the order of 3.5 meters diameter by 3.4 meters in height, as can be seen in Fig.7.

The dimensioning in this latter example leads to an "exact" matching of shapes and allows nesting the formworks with minimum volume. However, it is to be noted that arbitrary long conical sections can also be manufactured and matched together at their matching surfaces. For example, conical tower modules longer than the "exact" length can be manufactured at the factory and then transported to the construction site, where it will be assembled together. In such a case, the formwork elements can still be fitted into each other. The volume of the nested formwork elements would be larger than that of the "exact" matching, but still less than that required for the transport of cylindrical modules.

## Claims

1. A support column consisting of an assembly of hollow-section column segments, **characterised in that**
   each column segment comprises a composite formwork element having
   an inner tubular shell made of fibre reinforced polymer; and
   an outer tubular shell made of fibre reinforced polymer and surrounding said inner tubular shell so as to define an annular chamber therebetween;
   the chamber of each composite formwork element is filled with concrete or mortar; and
   the composite formwork elements of two consecutive column segments are at least partially joined together.

2. The support column according to claim 1, **characterised by** spacing means designed to maintain the spacing between said inner and outer tubular shells.

3. The support column according to claim 1 or 2, **characterised in that** said inner and outer tubular shells have a cylindrical shape.

4. The support column according to claim 1 or 2, **characterised in that** said inner and outer tubular shells have a truncated conical shape.

5. The support column according to claim 3 or 4, **characterised in that** said inner and outer tubular shells are coaxially arranged so that said annular chamber has a ring-shaped section.

6. The support column according to claims 2 and 3, 4 or 5, **characterised in that** said spacing means comprises a corrugated sheet in-between said inner and outer shells and bonded thereto, said corrugated sheet having a thickness corresponding to the spacing between said inner and outer shells and being arranged in such a way as to define essentially axially extending channels in said chamber.

7. The support column according to claim 6, **characterised in that** said corrugated sheet is provided with holes to allow communication between the channels defined by said corrugated sheet in said chamber.

8. The support column according to claim 7, **characterised in that** said holes have a size that is at least two times the largest aggregate size of the concrete filling.

9. The support column according to any one of the preceding claims, **characterised in that** axial ends of said composite formwork element are closed.

10. The support column according to any one of the preceding claims, **characterised in that** said corrugated sheet is dimensioned and arranged in said annular chamber in such a way that there is at least one annular gap free of corrugated sheet.

11. The support column according to any one of the preceding claims, **characterised in that** the sides of said inner and outer shells defining said chamber have a roughened surface designed to provide shear locks.

12. The support column according to any one of the preceding claims, **characterised in that** two consecutive composite formwork elements are joined to each other by means of pre-impregnated uncured FRP laminates or of resin-infusion molding into a pre-shaped dry reinforcing fabric.

13. The support column according to any one of the preceding claims, **characterised in that** said inner and outer shells are made from fibre-reinforced polymer composites using any of glass, carbon, or aramid fibres or combinations with other fibres.

14. The support column according to any one of claims 6, 7 or 8, **characterised in that** said corrugated sheet is made of made from fibre-reinforced polymer.

15. Use of a support column according to any one of the preceding claims for supporting a wind turbine or a bridge.

16. A method for building a support column, wherein said support column is built from composite formwork elements having an inner tubular shell made of fibre reinforced polymer and an outer tubular shell made of fibre reinforced polymer and surrounding said inner tubular shell so as to define an annular chamber therebetween; and
    wherein said method comprises the steps of:

    (a) installing a first composite formwork elements;
    (b) filling the chamber of said first composite formwork element with concrete or mortar;
    (c) positioning and joining a further composite formwork element on top of the former composite formwork element; and
    (d) filling the chamber of said further composite formwork element with concrete or mortar.

17. A composite formwork element for a support column comprising:

    an inner tubular shell made of fibre reinforced polymer; and
    an outer tubular shell made of fibre reinforced polymer and surrounding said inner tubular shell so as to define an annular chamber therebetween to be filled with concrete or mortar.

18. The composite formwork element according to claim 17, wherein said annular chamber is closed at both axial ends.

19. The composite formwork element according to claim 18, wherein the ends of said annular chamber are filled with fibre reinforced polymer.

20. The composite formwork element according to any one of claims 17 to 19, comprising a corrugated sheet in-between said inner and outer shells and bonded thereto to maintain the shaping between said inner and outer shells, and wherein said corrugated sheet has a thickness corresponding to the spacing between said inner and outer shells and is arranged in such a way as to define essentially axially extending channels in said chamber.

21. The composite formwork element according to claim 20, **characterised in that** said corrugated sheet is dimensioned and arranged in said annular chamber in such a way that there is at least one annular gap free of corrugated sheet.

22. The composite formwork element according to claim 20 or 21, **characterised in that** said corrugated sheet is provided with holes to allow communication

**EP 1 624 137 A1**

between the channels defined by said corrugated sheet in said chamber for an improved shear transfer.

23. The composite formwork element according to any one of claims 17 to 22, **characterised in that** the sides of said inner and outer shells defining said chamber have a roughened surface designed to provide shear locks.

24. The composite formwork element according to any one of claims 17 to 23, **characterised in that** said inner and outer shells as well as said corrugated sheet are made from fibre-reinforced polymer composites using any of glass, carbon, or aramid fibres or combinations with other fibres.

25. The composite formwork element according to any one of claims 17 to 24, **characterised in that** said inner and outer tubular shells are coaxially arranged and have a cylindrical shape or a truncated conical shape.

Fig. 1

Fig. 2

Fig. 3

Fig. 4

22 ~

26

26

Fig. 5

$D_{TOP}$

114

114

118

116

t

h

α

$D_{base}$

Fig. 7

110

$112_9$

114

$112_6$

H

114

$112_2$

114

$112_1$

$D_{base}$

Fig. 6

Fig. 10

Fig. 9

Fig. 8

**EP 1 624 137 A1**

European Patent
Office

**EUROPEAN SEARCH REPORT**

Application Number

EP 04 10 3719

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 960 986 A (ARAND WILFRIED) 1 December 1999 (1999-12-01) | 1-5, 11-13, 15-17, 23,25 | E04H12/12 |
| A | * claims 1,5,7,9,11-15,28-30,33-38,40,53-55,70,78,79,81; figures * | 24 | |
| A | FR 2 586 737 A (VAHLBRAUK KARL HEINZ) 6 March 1987 (1987-03-06) * the whole document * | 1,6,16, 17,20 | |
| X | US 6 409 433 B1 (OWEN ALFRED W  ET AL) 25 June 2002 (2002-06-25) * the whole document * | 17,25 | |
| A | DE 198 32 921 A (KRETZ JOACHIM) 10 February 2000 (2000-02-10) * the whole document * | 1,15-17 | |
| A | PATENT ABSTRACTS OF JAPAN vol. 1997, no. 11, 28 November 1997 (1997-11-28) & JP 9 195584 A (HITACHI ZOSEN CORP), 29 July 1997 (1997-07-29) * abstract * | 1,15-17 | TECHNICAL FIELDS SEARCHED (Int.Cl.7)  E01D E04C E04H F03D |
| A | US 5 633 057 A (FAWLEY NORMAN C) 27 May 1997 (1997-05-27) * the whole document * | 1,15,17 | |

The present search report has been drawn up for all claims

| Place of search | Date of completion of the search | Examiner |
|---|---|---|
| The Hague | 23 November 2004 | Fordham, A |

EPO FORM 1503 03.82 (P04C01)

# EP 1 624 137 A1

**ANNEX TO THE EUROPEAN SEARCH REPORT
ON EUROPEAN PATENT APPLICATION NO.**

EP 04 10 3719

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2004

| Patent document cited in search report | | Publication date | Patent family member(s) | | Publication date |
|---|---|---|---|---|---|
| EP 0960986 | A | 01-12-1999 | DE | 19823650 A1 | 09-12-1999 |
| | | | EP | 0960986 A2 | 01-12-1999 |
| FR 2586737 | A | 06-03-1987 | DE | 8525294 U1 | 06-02-1986 |
| | | | FR | 2586737 A3 | 06-03-1987 |
| US 6409433 | B1 | 25-06-2002 | US | 2002159843 A1 | 31-10-2002 |
| DE 19832921 | A | 10-02-2000 | DE | 19832921 A1 | 10-02-2000 |
| JP 9195584 | A | 29-07-1997 | NONE | | |
| US 5633057 | A | 27-05-1997 | US | 6519909 B1 | 18-02-2003 |
| | | | JP | 9509990 T | 07-10-1997 |
| | | | WO | 9523898 A1 | 08-09-1995 |
| | | | US | 5924262 A | 20-07-1999 |

EPO FORM P0459

For more details about this annex : see Official Journal of the European Patent Office, No. 12/82

13